# EUROPEAN PATENT APPLICATION

(11) **EP 4 819 012 A1**
(43) Date of publication of application: **07.10.2026**
(21) Application number: 25168080.7
(22) Date of filing: 02.04.2025
(51) Int. Cl.: G06Q 20/20, G06Q 20/32

(54) **PAYMENT SYSTEM USING SHORT RANGE AND MEDIUM/LONG RANGE WIRELESS COMMUNICATION PROTOCOLS**

(71) Applicant: Mastercard International, Inc., Purchase, NY 10577 (US)
(72) Inventor: Gallo, Francesco, 8045 Graz (AT); Johnson, Alan, Maldon, CM9 8HW (GB); Oliveira, Hugo, 1500-895 Lisboa (PT)
(74) Representative: Gill Jennings & Every LLP

(57) **Abstract**

A computer-implemented method is disclosed for effecting an electronic payment. The method involves a user device establishing a first communication channel with a merchant system comprising a plurality of merchant devices using a first wireless communication protocol. The user device and merchant system exchange ultra-wideband (UWB) capability data via the first communication channel to establish an UWB ranging session including the user device and the plurality of merchant devices. A proximate merchant device that is closest to the user device is determined using the UWB ranging session. An NFC channel or optical channel is established between the proximate merchant device and the user device, and a correlation identifier that uniquely identifies the user device is transmitted from the user device to the proximate merchant device via the NFC channel or optical channel. The user device transmits payment data either via the NFC channel/optical channel or via the first communication channel.

## Description

### FIELD OF INVENTION

This invention relates to electronic payment systems, and particularly to an electronic payment system that makes use of a fusion of short range and medium/long range wireless communication protocols.

### BACKGROUND

Electronic payments via near-field communication (NFC) are increasingly common. Briefly, an NFC payment involves an NFC-enabled user device being brought into NFC communication range (approx. 4cm) of an NFC antenna of a merchant device (e.g. a Point of Sale, POS, terminal). An NFC communication channel is established between the merchant device and the user device and is used to transfer payment information that enables a payment to be taken. This is sometimes referred to as 'tap to pay'.

An NFC communication data rate is relatively low (approx. 100Kbps to 450Kbps). This, combined with the short communication range (approx. 4cm) of NFC, means that for a sustained exchange of data a user is required to either hold their device within the communication range of the NFC antenna of the merchant device for an undesirably long time or to regularly bring their device into NFC communication range to transmit/receive additional bursts of data. Neither option provides a favourable user experience.

In view of these drawbacks of NFC, proposals have been made to use Bluetooth Low Energy (BLE) as a mechanism for facilitating an electronic payment. The range of BLE is of the order of metres (e.g. 5m to 50m) and the data rate is higher (e.g. 1 Mbps to 5 Mbps) such that a sustained exchange of data between a user device and a merchant device is possible via BLE without requiring the user to hold the user device in a particular location for a relatively long time. However, the payment experience provided by such systems is unfamiliar to the user since there is no 'tap to pay' component to this experience.

Additionally, in an environment in which there are multiple Bluetooth-enabled merchant devices (e.g. a checkout area of a shop), the larger range of BLE makes it difficult to unambiguously link a particular user device with a particular transaction. A scenario in which a user accidentally pays for the wrong set of items is thus possible.

Furthermore, in a BLE-based payment system, a user typically approves a transaction via interaction with an application installed on their user device. Users are prone to accidental interaction with application user interfaces on a user device, particularly on touchscreen devices (e.g. pressing the wrong area of the screen or a so-called 'pocket' interaction), such that payment approval could be accidentally given without the user's intention to do so. The user experience relating to approving a payment can also be cumbersome as the user must bring the appropriate application into the foreground and interact with the correct graphical user interface element (e.g. a 'pay now' button) in order to approve the payment. User data such as address information, email address, loyalty card information, offer information and the like may additionally or alternatively need to be collected. This can lead to slower throughput of users in a payment area of a shop.

Ultra-wideband (UWB) is a locating technology that enables a location of a UWB-enabled device to be determined relative to another UWB-enabled device to an accuracy of a few centimetres. The combination of UWB and BLE has thus been proposed for an electronic payment system. While this combination of protocols may lessen the probability of a user erroneously paying for the wrong set of items, the other issues noted above remain.

Another payment technique that is increasingly prevalent involves the use of a Quick Response (QR) code. A merchant displays a QR code, typically on a screen of a merchant device located at or near the point of sale, to allow a user to scan the QR code using their device. The QR code encodes information relating to a transaction that is taking place and an appropriately configured application (e.g. a web browser) on the user's device causes a payment to be made based on the information obtained from the QR code. The payment data itself is transmitted via another channel, e.g. a cellular network provided by the user device.

While addressing some of the issues of NFC payments, QR code payments are not without their own challenges.

Firstly, the optical channel used to transmit information via the QR code is unidirectional; that is, this optical channel carries information from the merchant device to the user device but cannot carry information in the other direction, i.e. from the user device to the merchant device. The payment process must therefore rely on the availability of an out-of-band channel (e.g. a cellular network) that is provided by the user device. Such user-provided out-of-band channels are subject to communication issues, e.g. lack of cellular coverage. Payments effected by QR code can thus be unreliable.

Secondly, it is typically the case that a user is required to enter information manually via their user device to complete a QR code-based transaction. This is because the QR code can encode information about a transaction (e.g. amount due, merchant details, etc.) but the merchant device does not know anything about the user at the time of generating the QR code. The user must therefore enter information such as payment information and/or personal information (e.g. an email address) to complete the payment. This process is time-consuming for the user, as well as being subject to user error, and thus is not conducive to a positive payment experience for the user.

There is thus a need for an electronic payment system that is more flexible than existing NFC systems and existing QR code system in terms of range, data throughput and user experience but which also addresses the issues noted above.

### SUMMARY OF THE INVENTION

A computer-implemented method is disclosed for effecting an electronic payment. The method involves a user device establishing a first communication channel with a merchant system comprising a plurality of merchant devices using a first wireless communication protocol. The user device and merchant system exchange ultra-wideband (UWB) capability data via the first communication channel to establish an UWB ranging session including the user device and the plurality of merchant devices. A proximate merchant device of the plurality of merchant devices that is closest to the user device is determined using the UWB ranging session. An NFC channel or an optical channel is established between the proximate merchant device and the user device, and a correlation identifier that uniquely identifies the user device is transmitted from the user device to the proximate merchant device via the NFC channel or the optical channel. The user device transmits payment data via any of the NFC channel, the optical channel or the first communication channel.

The proposed computer-implemented method preserves the existing 'tap to pay' and 'consumer-presented QR-code' user experience such that user familiarity is improved. This in turn translates to a greater average throughput of users in a payment area of a shop and can also reduce the number of erroneous payment approvals caused by a user mis-interacting with a payment application on their user device. The greater data rate and range of BLE or an equivalent wireless communication technology can be leveraged to enhance the user experience, e.g. by enabling real-time updating of a digital shopping basket application. Data obtained from the UWB ranging session can be used to pre-activate an NFC interface of a proximate merchant device or pre-active an optical interface by displaying a QR-code on the user device, further reducing transaction time and improving user throughput.

In a first aspect, the invention provides a computer-implemented method for effecting an electronic payment, comprising: establishing, by a user device using a first wireless communication protocol, a first communication channel with a merchant system comprising one or more merchant devices; exchanging, by the user device with the merchant system via the first communication channel, ultra-wideband, UWB, capability data; establishing, by the user device based on the UWB capability data, an UWB ranging session with the one or more merchant devices; exchanging, by the user device with the merchant system via the first communication channel, a first correlation identifier that uniquely identifies the user device; receiving, by the user device from the merchant system and via the first communication channel, data relating to a digital shopping basket associated with the user device and a proximate merchant device of the one or more merchant devices, the user device located within a threshold distance from the proximate merchant device; establishing, by the user device, a near-field communication, NFC, channel or an optical channel with the proximate merchant device; transmitting, by the user device via the NFC channel or the optical channel, the first correlation identifier to the proximate merchant device; either: a) transmitting, by the user device via the NFC channel or the optical channel, payment data to the proximate merchant device; or b) transmitting, by the user device via the first communication channel, payment data to the merchant system; and receiving, by the user device from the merchant system via the first communication channel, a transaction result.

In a second aspect, the invention provides a computer-implemented method for effecting an electronic payment, comprising: establishing, by a merchant system using a first wireless communication protocol, a first communication channel with a user device, the merchant system comprising one or more merchant devices; exchanging, by the merchant system with the user device via the first communication channel, ultra-wideband, UWB, capability data; establishing, by the one or more merchant devices based on the UWB capability data, an UWB ranging session with the user device; exchanging, by the merchant system with the user device via the first communication channel, a first correlation identifier that uniquely identifies the user device; sending, by the merchant system to the user device and via the first communication channel, data relating to a digital shopping basket associated with the user device and a proximate merchant device of the one or more merchant devices, the proximate merchant device located within a threshold distance from the user device; establishing, by the proximate merchant device, a near-field communication, NFC, channel or an optical channel with the user device; receiving, by the proximate merchant device via the NFC channel or the optical channel, a second correlation identifier from the user device; either: a) receiving, by the proximate merchant device via the NFC channel or the optical channel, a payment token from the user device; or b) receiving, by the merchant system via the first communication channel, a payment token from the user device; and transmitting, by the merchant system to the user device via the first communication channel, a transaction result.

In a third aspect, the invention provides a user device configured to implement the method of the first aspect.

In a fourth aspect, the invention provides a merchant device configured to implement the method of the second aspect.

In a fifth aspect, the invention provides a computer-readable medium comprising instructions which, when executed by a processor of an electronic device, cause the electronic device to perform the method of the first aspect or the second aspect.

Further preferred features of the invention are set out in the appended dependent claims.

### BRIEF DESCRIPTION OF THE DRAWINGS

Figure 1 is a schematic diagram of a system capable of implementing embodiments of the invention.
Figure 2 is a sequence diagram illustrating a method of effecting an electronic payment according to an embodiment of the invention.
Figure 3 is a schematic diagram of an electronic device capable of implementing embodiments of the invention.

### DETAILED DESCRIPTION OF EMBODIMENTS

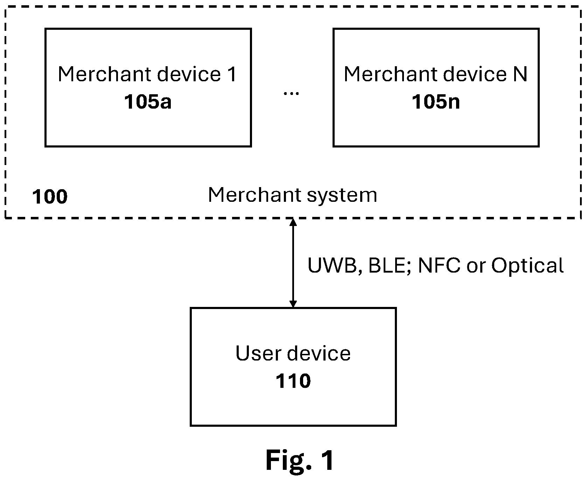

Referring to Fig. 1, an environment in which the invention operates is shown. The environment includes a merchant system 100 that comprises at least one merchant device. In the illustrated embodiment a plurality of merchant devices 105a - 105n are shown, but one merchant device is equally possible. The plurality of merchant devices 105a - 105n may comprise any number of merchant devices. Merchant devices 105a - 105n may be controlled by a central controller (not shown) of merchant system 100, or merchant devices 105a - 105n may be individually controlled by respective integrated processors. Merchant devices 105a - 105n may be communicatively coupled to one another, e.g. via a wired or wireless network such as a BLE mesh network.

Merchant system 100 is typically located at the premises of an establishment wishing to enable users to pay for goods and/or services via electronic means. For example, merchant system 100 can be located on a shop floor. Alternatively, some components of merchant system 100 may be located on a shop floor and others may be located elsewhere, e.g. a back office of the shop. The specifics of this will vary according to implementation environment.

Each merchant device 105a - 105n is configured to communicate via UWB, NFC or an optical channel (e.g. by reading a QR code or barcode displayed on a screen of a user device) and another wireless communication protocol. In the embodiments described below the another wireless communication protocol is BLE, but the invention is not limited to this as other medium or long-range wireless communication protocols (e.g. Wi-Fi, Bluetooth, Zigbee) can alternatively be used.

Here, 'medium or long-range' refers to communication protocols having an effective communication range over distances of approximately one metre or more. This is contrasted with a 'short range' communication protocol, of which NFC is an example, which has an effective communication range of less than one metre, more particularly less than 10 centimetres. For the purposes of this specification, an optical channel is also considered to be short-range because the effective communication range of an optical channel is limited by the resolving power of an optical sensor (e.g. a camera). That is, a typical optical code (e.g. a quick response, QR, code, or a barcode) can be successfully resolved at a distance of 5cm to 1m from the optical sensor performing the reading. An optical channel can be provided by an optical sensor, e.g. an optical scanner or camera configured as a barcode reader or QR code reader.

UWB, BLE, NFC and optical communication protocols, and the hardware and software to implement them, are all known per se. Therefore, details of these communication protocols are not provided in this document. Suffice to say that each merchant device 105a - 105n includes all necessary hardware, software and/or firmware to enable communication via UWB and BLE, as well as one or both of NFC and an optical communication protocol.

The form of a merchant device can vary. In one embodiment each merchant device 105a - 105n is a relatively complex point-of-sale (POS) device including, in addition to the aforementioned UWB, BLE and NFC and/or optical communication capabilities, any combination of: one or more displays for providing information to a cashier and/or a user, a scanner for scanning items that a user wishes to purchase (this may be the same scanner as supporting the optical channel, or a different scanner), an internet-enabled network interface card (e.g. an Ethernet card), a speaker for generating sound audible to a cashier and/or user, and/or a POS terminal configured to carry out electronic payments consistent with the Europay, MasterCard, and Visa (EMV) standard. Each merchant device may be operated by a cashier, or it may be automated (a so-called 'self-service till').

In another embodiment each merchant device 105a - 105n is a relatively unsophisticated device such as a mobile device having the aforementioned NFC and/or optical channel, UWB and BLE capabilities. These capabilities may be inherently part of the mobile device (e.g. integrated antennae, firmware and/or software) or they may be provided via additional external components, e.g. NFC/UWB/BLE transceiver(s) or an optical sensor (e.g. a camera or scanner) connected to the mobile phone via a wired (e.g. USB) or wireless (e.g. Wi-Fi or cellular) interface.

Embodiments in which merchant devices 105a - 105n are a mixture of the devices described above are also possible.

A user device 110 is also present. User device 110 is portable and will typically take the form of a mobile phone. However, the invention is not limited to this as any portable user device, e.g. a tablet, smart watch, wearable and the like can be configured to implement the invention.

Here, the term 'user' indicates a person wishing to effect an electronic payment in exchange for one or more items. The items may be goods and/or services. In this specification the term 'customer' is thus synonymous with 'user'.

User device 110 is configured to communicate via UWB and the another wireless communication protocol discussed above, e.g. BLE. Specifically, user device 110 includes all necessary hardware, software and/or firmware to enable communication via UWB and BLE (or equivalent protocol).

User device 110 is also configured to communicate by NFC and/or an optical channel and includes all necessary hardware, software and/or firmware to enable communication via these channels. The optical channel hardware will typically include an optical sensor such as an optical scanner or camera, but any mechanism for detecting an optically-readable code such as a QR code or barcode can be used.

An optical channel refers to any mechanism by which data can be communicated in a manner that is detectable by an optical sensor. Specifically, an optical sensor detects an optical code and extracts data from the optical code. This is termed 'reading' an optical code. The optical code can be any indicia that is capable of conveying information. Examples of such indicia include barcodes and QR codes. Techniques for QR code/bar code generation and reading are known per se and thus are not described in detail here. As an example, EMVCo^{®} provides an EMV^{®} QR code specification that sets out a standardised template for the generation of QR codes suitable for use in EMV^{®}-compliant payments.

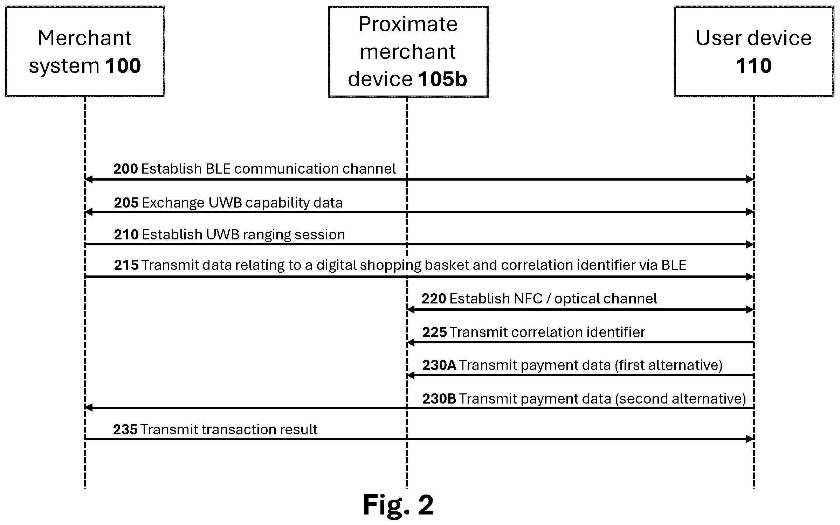

User device 110 is configured to communicate with merchant system 100 using UWB, BLE (or equivalent protocol) and NFC and/or an optical channel. The specifics of this communication are discussed below in connection with Fig. 2.

Fig. 2 is a sequence diagram showing the interaction between the components shown in Fig. 1. It will be appreciated that where a communication action is described from the perspective of a particular device, e.g. device X transmits Y to device Z, this should be understood as also being a disclosure of the corresponding inverse action, e.g. device Z receives Y from device X.

Turning now to Fig. 2, in step 200 user device 110 establishes a first communication channel with merchant system 100. The first communication channel uses a first wireless communication protocol, e.g. BLE. Alternative communication protocols that are suitable include: Wi-Fi and Zigbee. Other medium or long-range wireless communication protocols can alternatively be used. The first communication channel may be secured (e.g. encrypted), or it may not be secured.

Either of merchant system 100 or user device 110 can initiate the establishment of the first communication channel. The process for establishing the first communication channel is governed by the specifics of the particular communication protocol being used and is thus within the abilities of a skilled person to implement. As such, a detailed discussion of the establishment of the first communication channel is not provided here. In the case of BLE, the first communication channel can be established using the BLE Service Discovery Protocol as is known in the art.

Any component of merchant system 100 can establish the first communication channel with user device 110. That is, any of merchant devices 105a - 105n can establish the first communication channel with user device 110. Alternatively, an additional component of merchant system 100 that is not shown in Fig. 1 can establish the first communication channel. This additional component could be, for example, a central controller of merchant system 100, a BLE beacon of merchant system 100, or similar. The first component of merchant system 100 that user device 110 comes into communication range with typically serves as the point of communication for user device 110. Components of merchant system 100 are communicatively coupled to one another such that any part of merchant system 100 can communicate with user device 110 via the first component. A handover can be performed in which the point of contact of merchant system 100 for user device 110 is changed, e.g. if user device 110 moves out of range of a particular component of merchant system 100.

A trigger for establishing the first communication channel can be user device 110 entering an effective communication range of merchant system 100. The effective communication range in the case of BLE may be 5m, 10m, 20m or 50m, for example. The effective communication range will typically approximate a relevant distance in the context of the environment in which merchant system 100 is deployed; for example, the first communication channel may be established responsive to user device 100 entering the premises of a shop or entering a specific payment zone or area of a shop.

In step 205, user device 110 and merchant system 100 exchange UWB capability data via the first communication channel. The UWB capability data specifies UWB capabilities of user device 110 and merchant system 100. The UWB capability data can include any capabilities relevant to the establishment of a UWB ranging session as is known per se in the art; for example, supported operating frequency band(s), supported UWB protocol version(s), and the like. The first communication channel is thus used as an out-of-band (OOB) communication channel to facilitate the establishment of a UWB ranging session involving merchant system 100 and user device 110.

In step 210, user device 110 establishes a UWB ranging session with the plurality of merchant devices 105a - 105n. The UWB ranging session is established based on the UWB capability data exchanged in step 205. The UWB ranging session may be secured, e.g. in the manner specified by the FiRa Consortium, or the UWB ranging session may not be secured.

The UWB ranging session enables merchant system 100 and user device 110 to determine, in real-time or near real-time, a location of user device 110 relative to the plurality of merchant devices 105a - 105n. The location of user device 110 can be determined to a relatively high accuracy, e.g. a few centimetres. This is sufficient to unambiguously determine which of merchant devices 105a - 105n user device 110 is closest to at any given time. The particular merchant device that user device 110 is closest to at a given moment is referred to hereafter as proximate merchant device 105a.

Specifically, user device 110 is located within a threshold distance of proximate merchant device 105a. The threshold distance will vary according to the specific physical arrangement of the merchant devices 105a - 105n. The threshold distance is set such that it can be unambiguously determined which one of merchant devices 105a - 105n user device 110 is currently closest to in terms of physical distance. In an exemplary configuration in which the shortest distance between any two of merchant devices 105a - 105n is two metres, the threshold distance can be set to approximately 50 centimetres, for example. A skilled person having the benefit of this teaching will be able to select a suitable threshold distance. It is expected that a suitable threshold distance will typically fall within the range of 10 centimetres to 1 metre, but this is not limiting as threshold distances outside this range are also possible.

It will be appreciated that the proximate merchant device can be any one of merchant devices 105a - 105n. In the following the example of merchant device 105a being the proximate merchant device is used, but this is not limiting as any of merchant devices 105a - 105n can be the proximate merchant device. It will also be appreciated that the identity of the proximate merchant device may change over time as user device 110 moves throughout the region in which merchant devices 105a - 105n are located. The close proximity of user device 110 to proximate merchant device 105a indicates that the user wishes to make a purchase of one or more items using proximate merchant device 105a.

An NFC interface of proximate merchant device 105a can be pre-activated based on data obtained via the UWB ranging session. Pre-activation refers to preparing the NFC interface for an NFC interaction with user device 110 (see step 225 of Fig. 2) prior to the establishing, by user device 110, an NFC channel with proximate merchant device 105a. Pre-activation can include the NFC interface of proximate merchant device 105a being switched to an 'active', "ready' or 'power on' state in which the NFC interface is ready to perform communication via an NFC protocol. Pre-activating the NFC interface of proximate merchant device 105a can reduce the amount of time that an NFC exchange with user device 110 takes, improving user experience since the overall transaction time is reduced and the amount of time that the user must hold user device 110 proximate the NFC interface of proximate merchant device 105a is also reduced.

Pre-activation of the NFC interface of proximate merchant device 105a may occur after it has been determined via UWB that user device 110 has been within the threshold distance of proximate merchant device 105a for a specific amount of time, e.g. five to thirty seconds. This can prevent unnecessary pre-activation of an NFC interface of a merchant device that is only temporarily the proximate merchant device, e.g. as the user walks past a first merchant device on the way to a second, different merchant device that they intend to use to effect payment.

Pre-activation of the NFC interface can be accompanied by user device 110 transmitting a data structure including one or more items for purchase to merchant system 100, e.g. proximate merchant device 105a, via the first communication channel. A trigger for transmitting this data structure can be the same as for proximate merchant device 105a activating its NFC interface; i.e. that the user device 110 determines, via UWB ranging, that user device 110 has been within the threshold distance of proximate merchant device 105a for the specific amount of time. The data structure can be obtained by user device 110 directly during the shopping process, e.g. the user uses user device 110 to scan or otherwise enter details of items as they browse a shop and identify items they wish to purchase.

Merchant system 100 can, if necessary, transmit this data structure to proximate merchant device 105a if not received directly by proximate merchant device 105a. This allows proximate merchant device 105a to obtain a list of goods and/or services that the user wishes to purchase automatically, i.e. without the user or a cashier needing to manually scan goods or otherwise manually enter information about the items for purchase. In this case, the pre-activation of the NFC interface of proximate merchant device 105a means that the NFC interface can be ready at approximately the same time as the proximate merchant device 105a receives the data structure indicating the items for purchase, i.e. from the earliest moment at which a user could effect payment. Any delays in the transaction process associated with the user waiting for the NFC interface of proximate merchant device 105a to enter a ready state are thus removed.

The user can interact with proximate merchant device 105a, or a cashier thereof to indicate the one or more items that they wish to purchase. Here, 'items' includes goods and/or services. The interaction can involve, for example, scanning one or more items using a barcode scanner or similar of proximate merchant device 105a, or presenting the one or more items to a cashier of proximate merchant device 105a for the cashier to enter details of said items, e.g. by scanning a respective barcode of each of said items. Alternatively, the user may specify one or items that they wish to purchase, either verbally to a cashier of the proximate merchant device 105a or by inputting a selection of said one or more items via a human interface device (e.g. a touchscreen) of proximate merchant device 105a. Any other mechanism for specifying items for purchase can alternatively be used, e.g. scanning items using user device 110 as discussed above.

Pre-activation is also possible in the case of the use of an optical channel. Pre-activation of the optical channel can include activating an optical sensor of proximate merchant device 105a such that the optical sensor is a ready state, i.e. the optical sensor is powered on and capable of detecting an optical code and performing reading of the optical code.

Pre-activation of the optical channel can additionally or alternatively include preparatory action by user device 110. The preparatory action can include any one of more of: preparing data and an optical code to be shared; preparing a button or other such graphical user interface element on a user interface of user device 110 such that, when the graphical user interface element is interacted with by a user, the optical code is displayed; and/or displaying the optical code on a display of user device 110. A brightness of the display of user device 110 may be adjusted, e.g. increased to a higher level or increased to a maximum level, in order to make the optical code easier to read by proximate merchant device 105a.

In step 215, user device 110 receives data relating to a digital shopping basket associated with user device 110 and proximate merchant device 105a. The data is transmitted by merchant system 100. The data can be transmitted by any component of merchant system 100, e.g. proximate merchant device 105a. The data is transmitted via the first communication channel. The data can be transmitted by a merchant application installed on merchant system 100, e.g. on proximate merchant device 105a. The data can be received by a shopping application installed on user device 110.

Additionally, in step 215, user device 110 and merchant system 100 exchange a correlation identifier. The correlation identifier uniquely identifies user device 110. The correlation identifier can take any form that is sufficient to uniquely identify user device 110. The correlation identifier can be a string of randomly generated characters, or a global unique identifier (GUID), for example. The correlation identifier can be any number of characters in length provided that the length is sufficient to make the probability of two user devices having the same correlation identifier low. A length in the range of ten to thirty characters (e.g. twenty characters) is suitable in most uses cases, for example, although the invention is not limited to this range of lengths.

The correlation identifier can be generated by user device 110 or by any component in merchant system 100. The exchange of the correlation identifier in step 215 can thus involve transmission of the correlation identifier by user device 110 to merchant system 100, or vice versa, via the first communication channel (e.g. the BLE communication channel).

A trigger condition for generating the correlation identifier can be any event associated with user device's location relative to the plurality of merchant devices 105a - 105a, e.g. the establishment of the first communication channel indicating the user device 110 entering BLE communication range or the detection via UWB of user device 110 having a location within a second threshold distance from a specified location, e.g. a location of a payment area containing some or all of the plurality of merchant devices 105a - 105n.

A new correlation identifier may be generated each time the trigger condition is satisfied. Alternatively, the correlation identifier may be generated only the first time the trigger condition is satisfied, and subsequent instances of the trigger condition being satisfied may be ignored until a specified time has elapsed. Regeneration of the correlation identifier in this manner can improve security and reliability as this can ensure that any given correlation identifier is valid only for a relatively short time.

Explicit limitations on the period of validity of the correlation identifier can additionally or alternatively be specified. The correlation identifier may be valid only for a certain amount of time following generation. This validity period can be in the range of one minute to one hour, e.g. five minutes, ten minutes, twenty minutes. Longer validity periods such as several hours or a day are also contemplated. The validity period is preferably selected based on an average amount of time a user typically spends shopping in a particular shop or a particular type of shop. Specifically, the validity period is preferably set somewhat above, but not significantly above, the typical amount of time a user spends shopping in a particular shop, or particular type of shop. This increases the probability that the correlation identifier is valid for the entire duration of the user's shop, but not valid a significant time after completion of the shop. This helps to prevent confusion between successive shopping trips of a single user device and can also increase security since a correlation identifier obtained by an attacker is likely not valid for long enough to enable the attacker to implement an attack using the correlation identifier.

The digital shopping basket being associated with user device 110 means that the item(s) in the digital shopping basket were put in the digital shopping basket by the user of user device 110 or on behalf of the user of user device 110. That is, the user of user device 110 wishes to purchase said item(s).

The digital shopping basket being associated with proximate merchant device 105a means that proximate merchant device 105a is expecting to be involved in the payment transaction that will be performed to pay for the item(s) in the digital shopping basket. That is, proximate merchant device 105a expects to be involved in steps 220 to 235 of Fig. 2.

The digital shopping basket may comprise a data structure that holds data relating to one or more items that the user wishes to purchase. The data can include, but is not limited to, any one or more of the following:
- a descriptor of an item for purchase, e.g. a name, make, model, brand, etc. of an item;
- a cost of an item;
- a total cost of all items currently in the digital shopping basket;
- promotional information relating to the digital shopping basket; and/or
- reward information relating to the digital shopping basket.

Essentially, any information relating to a set of items for purchase can be included in the digital shopping basket. The user may be able to view the digital shopping basket via an application running on user device 110, e.g. a shopping application (further details below). Merchant system 100 can provide real-time updates to the digital shopping basket, e.g. as an item is scanned by a scanner of proximate merchant device 105a. Information relating to said item can be sent to user device 110 by merchant system 100 (e.g. proximate merchant device 105a) via the first communication channel.

In this way, a user can obtain real-time information relating to their shopping such as a number of items to be purchased, a total cost of the items to be purchased, an amount of a saving or discount associated with the items to be purchased, a number of reward or loyalty points earnable by the user on completion of the purchase of the items currently in their digital shopping basket, and the like. This is possible without the user having to hold their user device 110 in a position that is inconvenient, e.g. close to an NFC antenna or optical sensor. Additionally, there is no requirement for user device 110 to have an active connection to the Internet for this to be achieved because all the necessary information is transmitted to user device 110 by merchant system 100 via the first communication channel.

The shopping application can also show non-item related information that is relevant to the transaction, e.g. details of the merchant, details of any payment scheme that is being applied (e.g. pay in instalments), and the like.

It is also possible for user device 110 to transmit user data to merchant system 100, e.g. as part of step 215 or as a separate step. Any such user data can be transmitted via the first communication channel. The user data can be transmitted to any component of merchant system 100, such as proximate merchant device 105a. The user data can be any data that is considered useful. An example of user data is user account data, e.g. loyalty card data and the like. User account data can be used by merchant system 100 to automatically apply any discount, promotion, offer, voucher, gift card etc. that the user has associated with their account to the current transaction. This reduces the time for a transaction to be completed because there is no delay introduced whilst the user retrieves user account data (e.g. an account number) and enters this in a manual fashion.

In step 220, user device 110 establishes an NFC channel with proximate merchant device 105a. The establishment of the NFC channel is achieved by placing user device 110 proximate (e.g. within 4cm of) an NFC antenna of proximate merchant device 105a, i.e. by performing a so-called 'tap' action with user device 110. A user performs this tap action once all the items that they wish to purchase have been indicated to proximate merchant device 105a and are in the user's digital shopping basket, i.e. once the user is ready to check out and effect payment for the items that they wish to purchase.

Alternatively, in step 220, user device 110 establishes an optical channel with proximate merchant device 105a. The establishment of the optical channel is achieved by placing user device 110 in a line of sight of an optical sensor of proximate merchant device 105a and sufficiently close to the optical sensor that an optical code displayed on a display of user device 110 can be successfully read by the optical sensor. A user performs this positioning operation once all the items that they wish to purchase have been indicated to proximate merchant device 105a and are in the user's digital shopping basket, i.e. once the user is ready to check out and effect payment for the items that they wish to purchase.

In step 225, user device 110 transmits a correlation identifier uniquely identifying user device 110 to proximate merchant device 105a via the NFC channel or optical channel established in step 220. In the case of the optical channel, transmission refers to display of the optical code encoding the correlation identifier on a display of user device 110 such that the optical sensor of proximate merchant device 105a can successfully read the optical code. The correlation identifier is retrieved by user device 110, e.g. from a local storage medium accessible to user device 110.

In step 230, user device 110 transmits payment data to either proximate merchant device 105a via the NFC channel/optical channel (step 230A) or merchant system 100 via the first communication channel (step 230B). In the case of the second alternative of step 230B, any component of merchant system 100, e.g. proximate merchant device 105a, can receive the payment data.

The payment data can comprise any data that is necessary for merchant system 100 to obtain in order to carry out an electronic payment, e.g. according to the **EMV** standard. Payment data can include a payment token provided by user device 110, for example.

Proximate merchant device 105a can advertise via BLE (or an equivalent protocol) which of steps 230A and 230B it supports. User device 110 can select which of steps 230A and 230B is carried out based on the which of these steps 1) user device 110 supports and 2) which of these steps proximate merchant device 105a supports. In the case where both options are supported by both devices, user device 110 may select the option to use based on other factors such as a user preference specified within an application (e.g. the shopping application) installed on user device 110. Alternatively, user device 110 may select which option to use based on an amount of data that is required to be transmitted to merchant system 110, where larger amounts of data to be transmitted cause user device 110 to select the higher bandwidth first communication channel. Other factors such as signal quality may also be taken into account.

Preferably, it is mandatory for proximate merchant device 105a to advertise that it supports step 230A and optional for proximate merchant device 105a to advertise that it supports step 230B. Similarly, it is preferably mandatory for user device 110 to support step 230A and optional for user device 110 to support step 230B. This configuration ensures that step 230A is always available to any arbitrary combination of user devices and merchant devices, increasing the reliability of the overall system.

Optionally, step 230A / step 230B can involve user authentication. That is, user device 110 may require the user to authenticate themselves in some manner before user device 110 transmits the payment data. The authentication can take any known form, e.g. entry of a secret known only to the user such as a pin, passcode or particular pattern, or biometric authentication, and the like. Multiple forms of authentication can be required. Whether authentication is required may be conditional on factors relating to the transaction, e.g. a total value of the transaction exceeding a threshold value. Authentication information can be entered by the user into user device 110, e.g. by using a touchscreen or keypad of user device 110, and/or into proximate merchant device 105a, e.g. by using a touchscreen or keypad of proximate merchant device 105a.

Optionally, step 230A / step 230B may include user device 110 providing an opportunity for the user to select a particular payment instrument for use in the upcoming transaction. This may take the form of one or more graphical user interface elements representing a set of available payment instruments, where the user is able to select a particular payment instrument by clicking, touching, gesturing, etc. Similar graphical user interface elements can be provided to enable a user to select a voucher, loyalty card, gift card, merchant card, etc. to be applied during the transaction.

Step 230A can be performed concurrently with step 225. That is, the payment data (and any other data required) can be transmitted in a same data package as the correlation identifier. This can reduce the amount of time that it is necessary for the NFC channel/optical channel to be maintained, resulting in an improvement to user experience as the user does not need to hold user device 110 near to the NFC antenna/optical sensor of proximate merchant device 105a for an overly long time.

In the case where step 230A is performed and the user has selected a voucher, loyalty card, gift card, merchant card etc. for application during the transaction, user device 110 may transmit this information to merchant system 100 via the first communication channel. This keeps the amount of data that must be transmitted via the relatively low bandwidth NFC channel/optical channel to a minimum, meaning that the user need only hold user device 110 near to an NFC antenna/optical sensor of proximate merchant device 105a for a relatively short time.

Step 230B can also reduce the amount of time that it is necessary for the NFC channel/optical channel to be maintained. This is because the correlation identifier is smaller in size (i.e. fewer bits) than typical payment data. In step 230B the payment data is transmitted via a BLE communication channel, meaning that the user need only hold user device 110 near to an NFC antenna/optical sensor of proximate merchant device 105a for sufficient time to enable the relatively small correlation identifier to be transmitted.

In step 235, user device 110 receives a transaction result from merchant system 100 via the first communication channel. The transaction result indicates success or failure of the transaction. The transaction result can be transmitted to user device 110 by any component of merchant system 100, e.g. proximate merchant device 105a. The transaction result can be based on an authorisation response message as is defined in the **EMV** standard.

The transaction itself can be processed in a manner known in the art, e.g. according to the **EMV** standard. Briefly, upon obtaining the transaction data (step 230A or step 230B), merchant system 100 (e.g. proximate merchant device 105a) can generate an authorisation request message and transmit this message to a remote server, e.g. an issuer server, either directly or via an acquirer server. The issuer server can generate an authorisation response message indicating authorisation or non-authorisation of the transaction and transmit this back to merchant system 100, perhaps via the acquirer server. Processing of electronic payment transactions in this manner is known and as such further details are not provided here.

It will be appreciated that the process described above is familiar to the user. That is, from the user's perspective, to initiate a payment the user need only tap their user device on a merchant device or show an optical code displayed on the display of their user device. This results in improved user experience. Additionally, the average time taken for a transaction to be completed is reduced relative to a solely Bluetooth-based payment system due to both user familiarity and also the relatively short time required to tap a user device compared with approving a payment by interacting with a payment application, increasing user throughput in a payment zone or payment area of a shop.

The correlation identifier described above has dual functions. Firstly, the correlation identifier unambiguously indicates which user intends to make a payment. The short-range nature of NFC/optical communication means that a user is unlikely to accidentally signal that a payment is to be made, preventing a payment transaction from being initiated before the user is ready to do so. Additionally, it is unlikely that a user will accidentally initiate payment of a transaction relating to a different user.

Secondly, the correlation identifier enables merchant system 100 to confirm that the correlation identifier is the same correlation identifier as was exchanged in step 215. That is, merchant system 100 can compare the correlation identifier exchanged in step 215 (also referred to as a first correlation identifier) with the correlation identifier received from user device 110 in step 225 via the NFC channel or optical channel (also referred to as a second correlation identifier). If the comparison results in a match, merchant system 100 can definitively link the indication of an intention to pay (e.g. the NFC tap operation, or display of an optical code) performed in step 225 by user device 110 with the data exchanged in step 215. That is, the digital shopping basket displayed in the shopping application on user device 110 is definitively linked with the user's signalling an intention to pay using user device 110. This provides a non-repudiation mechanism that can be relied on by the merchant. This also increases the reliability and accuracy of the payment system as a whole due to the relative unlikeness of a user erroneously performing the tap / optical read operation relative to a long range communication payment indication (e.g. via BLE) that is based on a user accepting payment via a user interface element on their user device or similar.

In the case where the first correlation identifier and the second correlation identifier do not match, merchant system 100 may prevent the payment data received in step 230A or step 230B (e.g. a payment token) from being used to carry out an electronic payment. A no match case includes: the second correlation identifier is non-identical to the first correlation identifier; the second correlation identifier is mis-formatted, corrupt, truncated or lengthened or otherwise incorrect in some way; and the second correlation identifier is missing, i.e. user device 110 did not transmit a second correlation identifier as part of step 225.

In the no match case, merchant system 100 may notify the user that payment cannot be carried out due to the mismatch between the first and second correlation identifiers. This notification can be shown on a display of proximate merchant device 105a and/or on user device 110, with the notification being transmitted via the first communication channel in the latter case. The notification can take the form of setting the transaction result of step 235 to a value that indicates a transaction failure.

Alternatively, in the no match case, the payment data received in step 230A or step 230B (e.g. a payment token) can still be used to carry out an electronic payment. This improves user experience as the opportunity for successful payments to occur is maximised. However, in this case, merchant system 100 cannot definitively link the indication of an intention to pay performed in step 225 by user device 110 with the data exchanged in step 215. Accordingly, services provided by a shopping application that is associated with the digital shopping basket on user device 110 are not available. Examples of such services are discussed below, and can include: automatically adding points to a user's account based on a purchase, automatically applying a gift card, voucher, special offer etc. to the user's transaction, transmitting a receipt to a user's email address, and the like.

Merchant system 100 (e.g. proximate merchant device 105a) can transmit a message to user device 110 indicating that a no match condition was identified by merchant system 100. This message can be transmitted via BLE or equivalent, i.e. via the first communication channel. Responsive to receiving this message, user device 110 (e.g. the shopping application running on user device 110) can disable one or more services relating to the transaction as discussed in the paragraph directly above.

In the case of a transaction failure, the user may be offered the opportunity to repeat step 225, i.e. repeat the tap operation / optical operation, in order to confirm that the user does indeed wish to effect payment. In this case, merchant system 100 can be configured to determine that a second mismatch of a given pair of correlation identifiers is to be ignored to allow the user to effect payment successfully (subject to issuer requirements as is normal). The user can be offered the opportunity to repeat step 225 via a notification displayed on a display of proximate merchant device 105a and/or on user device 110, with the notification being transmitted via the first communication channel in the latter case.

As touched upon above, activities of user device 110 can be co-ordinated by a software application running on user device 110. This application is referred to in this specification as a shopping application. The shopping application is capable of controlling user device 110 to perform the activities described above, as well as presenting to the user relevant information relating to the shopping process, e.g. a digital shopping basket of the user. In addition to the shopping basket and payment functionality, the shopping application may be configured to obtain information from user device 110 relevant to the shopping process.

The user may set up an account within the shopping application. The shopping application can store, in association with the user account, data relating to the user, e.g. personal data, and/or data relating to payment cards, loyalty cards, vouchers, gift cards etc. that a user may wish to use in a payment transaction.

For example, the shopping application can be configured to obtain data relating to the user that is relevant to the shopping process. This data can take many forms. For example, the shopping application may retrieve personal data relating to the user, e.g. name, age, address, email address, social media handle and the like. This personal data can be retrieved from a memory of user device 110, perhaps via an API call to another application such as a 'contacts' application or a social media application. The personal data can be transmitted to merchant system 100 via the first communication channel, e.g. as part of step 215 discussed above, or in a separate step (not shown).

Merchant system 100 can use any data relating to the user received from user device 110 to enhance the shopping experience. For example, a user's name, address, email address, social media data etc. can be used by merchant system 100 to determine that the user qualifies for a particular promotion, e.g. a promotional rate, discount, loyalty points, rewards and the like. A voucher, loyalty card, merchant card, gift card, etc. that is associated with the user's account within the shopping application may be automatically applied to the transaction. Merchant system 100 can coordinate this with user device 110 via the first communication channel and the shopping application can update the digital shopping basket to reflect the same, e.g. indicate that a promotional rate or discount has been applied, show that points and/or rewards have been / will be added to a user's loyalty account, indicate that a voucher, loyalty card, gift card etc. has been applied. This unified approach enhances convenience, personalization, and engagement for users since discounts, loyalty points, rewards, vouchers, gift cards etc. are automatically applied to a user's account.

As another example, merchant system 100 can use the user's personal data to automatically populate a form or other such data structure that is relevant to the transaction. For example, a data structure that requires user data that accompanies a particular item (e.g. an insurance data structure) can be automatically populated. This reduces the time that the transaction takes and improves user experience.

The first communication channel can be used to transmit post-transaction data from merchant system 100 to user device 110. For example, a digital receipt can be transmitted from merchant system 100 to user device 110 after a transaction has been approved. The digital receipt can be accessed via the shopping application. The digital receipt may include a URL, e.g. a deep-link URL, and/or ePOS information that enables the user to easily and quickly perform post-transaction activities such as request a refund or cancel an order.

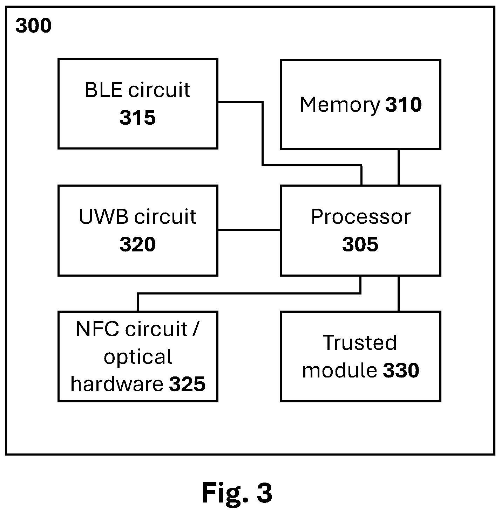

Referring now to Fig. 3, a schematic diagram of an electronic device 300 is shown. Electronic device 300 can implement the function of a merchant device or a user device as described above.

Electronic device 300 includes a processor 305. Processor 305 is communicatively coupled to memory 310, BLE circuit 315, UWB circuit 320, NFC circuit 325 and trusted module 330.

Processor 305 is configured to control operation of electronic device 300. Processor 305 is of a type known in the art per se and as such further details are not provided here.

Memory 310 is configured to store data. This data can include a shopping application as discussed above in the case where electronic device 300 performs the function of user device 110. In the case where electronic device 300 performs the function of one of merchant devices 105a - 105n, the memory can include a merchant application that is configured to implement any of the merchant actions discussed above. Memory 310 may be a non-transitory memory.

Electronic device 300 further includes a BLE circuit 315, a UWB circuit 320 and NFC circuit / optical hardware 325. BLE circuit 315 is configured to enable communication via BLE. UWB circuit 320 is configured to enable communication via UWB, specifically UWB ranging. NFC circuit 325 is configured to enable communication via NFC. Optical hardware 325 is configured to enable communication via an optical communication channel. Examples of each of these communication circuits and hardware can be found in the art and as such further details are not provided here.

In the case where electronic device 300 is to function as a merchant device, optical hardware 325 includes an optical sensor and firmware/software necessary for operating the optical sensor. In the case where electronic device is to function as a user device, optical hardware 325 includes a display and the necessary firmware/software for operating the display. Electronic devices intended to implement both functions can include an optical sensor and display.

It will be appreciated that both NFC and optical communication can be simultaneously supported, i.e. an NFC circuit and optical hardware can both be present.

It will also be appreciated that in other embodiments BLE circuit 315 is replaced with a circuit configured to implement a different medium or long-range communication protocol, e.g. a Wi-Fi circuit or a Zigbee circuit.

Electronic device 300 also includes a trusted module 330. This is a secure area of electronic device 300 that is capable of securely storing data. Trusted modules per se are known in the art and so further details are not provided here.

Trusted module stores a FiRa applet that is provided by the FiRa Consortium. The FiRa applet is capable of implementing UWB protocol services and actions, including the UWB ranging service. The FiRa applet is just one example of an entity that can implement an UWB ranging service - other applets offering equivalent functionality can be used in place of the FiRa applet.

In the case where electronic device 300 performs the functions of user device 110, trusted module 330 also includes a payment applet that is configured to implement a payment protocol, e.g. an EMV-compliant payment protocol.

In the case where electronic device 300 performs the functions of one of merchant devices 105a - 105n, trusted module 330 also includes an EMV Core applet that is provided by EMVco. The **EMV** Core applet is configured to implement the **EMV** payment protocol. In the case where an alternative payment protocol is used, the **EMV** Core applet would be substituted with another applet that is configured to implement the alternative payment protocol.

Trusted module 330 can be omitted and alternatively a software-based secure environment can be provided instead. In this case, the applets discussed above that are stored in trusted module 330 would instead be stored in the software-based secure environment.

It will be appreciated that the embodiments described above in method form can be encoded in a computer-readable format, such as a set of instructions stored on a computer readable medium. When the instructions are executed by a processor, the processor performs the method of the respective embodiment. The computer readable medium may be a non-transitory computer readable medium. Multiple processors may execute a respective part of the instructions to perform the corresponding part of the method according to the respective embodiment above.

It will also be appreciated that the embodiments described herein are purely illustrative and hence are susceptible to many modifications, substitutions, additions and the like. All such modifications, substitutions and additions are within the scope of the invention which is defined by the appended claims. Method steps described in this specification may be implemented in any order, in parallel or sequentially, unless specifically stated otherwise.

## Claims

1. A computer-implemented method for effecting an electronic payment, comprising:
establishing, by a user device using a first wireless communication protocol, a first communication channel with a merchant system comprising one or more merchant devices;
exchanging, by the user device with the merchant system via the first communication channel, ultra-wideband, UWB, capability data;
establishing, by the user device based on the UWB capability data, an UWB ranging session with the one or more merchant devices;
exchanging, by the user device with the merchant system via the first communication channel, a first correlation identifier that uniquely identifies the user device;
receiving, by the user device from the merchant system and via the first communication channel, data relating to a digital shopping basket associated with the user device and a proximate merchant device of the one or more merchant devices, the user device located within a threshold distance from the proximate merchant device;
establishing, by the user device, a near-field communication, NFC, channel or an optical channel with the proximate merchant device;
transmitting, by the user device via the NFC channel or the optical channel, the first correlation identifier to the proximate merchant device;
either:
a) transmitting, by the user device via the NFC channel or the optical channel, payment data to the proximate merchant device; or
b) transmitting, by the user device via the first communication channel, payment data to the merchant system;
and
receiving, by the user device from the merchant system via the first communication channel, a transaction result.

2. The computer-implemented method of claim 1, further comprising:
receiving, by the user device via the first communication channel, a message from the merchant system, wherein the message indicates that the first correlation identifier does not match with a second correlation identifier stored by the merchant system; and
in response to the message: disabling, by the user device, one or more functions in a shopping application installed on the user device, the shopping application associated with the digital shopping basket.

3. The computer-implemented method of claim 1 or claim 2, wherein the digital shopping basket comprises a data structure including one or more of:
respective descriptors of one or more items for purchase detected by the proximate merchant device;
respective item costs of one or more items for purchase detected by the proximate merchant device;
a total cost of one or more items for purchase detected by the proximate merchant device;
promotional information relating to the digital shopping basket; and/or reward information relating to the digital shopping basket.

4. The computer-implemented method of claim 3, wherein the digital shopping basket is updated in real-time using data received by the user device via the first communication channel.

5. The computer-implemented method of any preceding claim, wherein the correlation identifier is a string of randomly generated characters or a globally unique identifier, GUID.

6. The computer-implemented method of any preceding claim, further comprising:
based on data obtained via the UWB ranging session, pre-activating an NFC interface or an optical interface of the proximate merchant device prior to the establishing, by the user device, the NFC, channel or the optical channel with the proximate merchant device.

7. A computer-implemented method for effecting an electronic payment, comprising:
establishing, by a merchant system using a first wireless communication protocol, a first communication channel with a user device, the merchant system comprising one or more merchant devices;
exchanging, by the merchant system with the user device via the first communication channel, ultra-wideband, UWB, capability data;
establishing, by the one or more merchant devices based on the UWB capability data, an UWB ranging session with the user device;
exchanging, by the merchant system with the user device via the first communication channel, a first correlation identifier that uniquely identifies the user device;
sending, by the merchant system to the user device and via the first communication channel, data relating to a digital shopping basket associated with the user device and a proximate merchant device of the one or more merchant devices, the proximate merchant device located within a threshold distance from the user device;
establishing, by the proximate merchant device, a near-field communication, NFC, channel or an optical channel with the user device;
receiving, by the proximate merchant device via the NFC channel or the optical channel, a second correlation identifier from the user device;
either:
a) receiving, by the proximate merchant device via the NFC channel or the optical channel, a payment token from the user device; or
b) receiving, by the merchant system via the first communication channel, a payment token from the user device;
and
transmitting, by the merchant system to the user device via the first communication channel, a transaction result.

8. The computer-implemented method of claim 7, further comprising:
comparing, by the merchant system, the first correlation identifier and the second correlation identifier to determine whether the first correlation identifier and the second correlation identifier match;
in the case of a match, carrying out a payment transaction using the payment token; and
in the case of no match:
setting the transaction result to a value that indicates a transaction failure; or
carrying out a payment transaction using the payment token and transmitting, using the first communication channel, a message to the user device indicating that a no match condition was identified by the merchant system.

9. The computer-implemented method of claim 7 or claim 8, wherein the digital shopping basket comprises a data structure including one or more of:
respective descriptors of one or more items for purchase detected by the proximate merchant device;
respective item costs of one or more items for purchase detected by the proximate merchant device;
a total cost of one or more items for purchase detected by the proximate merchant device;
promotional information relating to the digital shopping basket; and/or reward information relating to the digital shopping basket.

10. The computer-implemented method of claim 9, wherein the digital shopping basket is updated in real-time using data transmitted to the user device via the first communication channel.

11. The computer-implemented method of any one of claims 7 to 10, wherein the correlation identifier is a string of randomly generated characters or a globally unique identifier, GUID.

12. The computer-implemented method of any one of claims 7 to 11, further comprising:
based on data obtained via the UWB ranging session, pre-activating an NFC interface or an optical interface of the proximate merchant device prior to the establishing, by the proximate merchant device, the NFC channel or the optical channel with the user device.

13. A user device configured to implement the method of any one of claims 1 to 6.

14. A merchant device configured to implement the method of any one of claims 7 to 12.

15. A computer-readable medium comprising instructions which, when executed by a processor of an electronic device, cause the electronic device to perform the method of any one of claims 1 to 12.
